# EUROPEAN PATENT SPECIFICATION

(11) **EP 2 224 511 B1**
(45) Date of publication and mention of the grant of the patent: **14.11.2012**
(21) Application number: 10153660.5
(22) Date of filing: 16.02.2010
(51) Int. Cl.: H01M 2/04, H01M 2/12

(54) **Rechargeable battery**
Wiederaufladbare Batterie
Batterie rechargeable

(30) Priority: 25.02.2009 US 155443 P; 02.07.2009 US 497504
(43) Date of publication of application: 01.09.2010
(73) Proprietor: Samsung SDI Co., Ltd., Gyeonggi-do (KR)
(72) Inventor: Byun, Sang-Won, Gyeonggi-do (KR); Ahn, Byung-Kyu, Gyeonggi-do (KR)
(74) Representative: Gulde Hengelhaupt Ziebig & Schneider

(56) References cited:
- EP-A2- 1 926 161
- US-A- 2 876 271
- US-A- 5 580 679
- US-A1- 2007 172 728
- HUFNAGEL W ED - HUFNAGEL W: "ALUMINIUM-SCHLUESSEL, PASSAGE" 1 January 1983 (1983-01-01), ALUMINIUM-SCHLUESSEL, DUSSELDORF, ALUMINIUM VERLAG, DE, PAGE(S) 75 - 81 , XP002025184 * the whole document *

## Description

The present invention relates to a rechargeable battery. More particularly, the present invention relates to a rechargeable battery including an improved cap assembly.

### Description of the Related Art

A rechargeable battery is generally distinguished from a primary battery in that it can be repeatedly charged and discharged. A rechargeable battery with low capacity includes a single unit cell, which is used for small portable electronic devices such as a mobile phone, a laptop computer, and a camcorder. On the other hand, a rechargeable battery with larger capacity includes a plurality of unit cells as a pack, and is commonly used as a power source for driving a motor of a hybrid electric automobile and the like.

The rechargeable battery can be mainly formed with a cylindrical or prismatic shape.

In addition, the rechargeable batteries are connected in series to form a rechargeable battery module with larger capacity and can be used for driving a motor of an electric vehicle requiring a lot of electrical power.

Rechargeable batteries include an electrode assembly, which is composed of positive and negative electrodes and a separator interposed therebetween, a case having a space for housing the electrode assembly, and a cap assembly combined with the case and sealing it.

When a rechargeable battery is formed in a cylindrical shape, an uncoated region where an active material is not coated is provided on positive and negative electrodes of the electrode assembly, and the uncoated region of the positive electrode and the uncoated region of the negative electrode are disposed to face in different directions from each other.

A negative electrode current collecting plate is attached to the uncoated region of the negative electrode, and a positive electrode current collecting plate is attached to the uncoated region of the positive electrode. The negative electrode current collecting plate is electrically connected to a case, and the positive electrode current collecting plate is electrically connected to a cap assembly to deliver current to the outside. Accordingly, the case plays a role of a negative terminal, and a cap-up mounted on the cap assembly to play a role of a positive terminal.

While the charge and discharge is repeated, gas is generated in the rechargeable battery causing an increase in internal pressure. If the internal pressure is continuously increased, the rechargeable battery may explode. In order to prevent the explosion, it is provided with an interrupting plate in which a notch is formed under the cap-up to be broken at a predetermined pressure.

The interrupting plate may be constituted of aluminium or an aluminium alloy, as disclosed by US 2007/0172 728 A1.

However, as the interrupting plate is sensitive to heat, it may be degraded during repeated charge and discharge. In this case, the interrupting plate is transformed under the predetermined pressure which can shorten the cycle life.

### SUMMARY OF THE INVENTION

The present invention provides a rechargeable battery including an interrupting plate that is easily transformed under the predetermined pressure condition but is resistant to degradation at higher temperatures.

According to the present invention, there is provided a rechargeable battery that comprises an electrode assembly that produces electrical current and a case that receives the electrode assembly, the case having an opening. The battery further comprises a cap assembly having a cap down, a cap up, a subplate that is coupled to the electrode assembly and an interrupting plate that is interposed between the cap up and the cap down. The interrupting plate is coupled to the subplate and formed of an aluminum alloy that includes magnesium (Mg) and zinc (Zn). The aluminum alloy includes 0.3 to 1.3 wt% of magnesium (Mg) and 0.1 to 0.3 wt% of zinc (Zn). The quantities of the alloy components should be selected to inhibit deformation of the plate due to heat.

The aluminum alloy may further include at least one selected from the group consisting of silicon (Si), iron (Fe), copper (Cu), manganese (Mn), and titanium (Ti).

Particularly, the interrupting plate may further include 0.2 to 0.4 wt% of silicon (Si), 0.3 to 1.0wt% of iron (Fe), 0.2 to 1.0 wt% of copper (Cu), and 0.9 to 2.0 wt% of manganese (Mn).

The interrupting plate may include a cap-up combined with the case, and a convex part mounted under the cap-up and protruding toward the bottom of case.

The rechargeable battery may further include a subplate mounted under the interrupting plate and welded with the convex part to electrically connect to the electrode assembly, a cap-down disposed between the interrupting plate and the subplate, and a protrusion disposed between the cap-down and the subplate.

The rechargeable battery may further include a current blocking member. In the current blocking member, the convex part is welded and combined with the subplate.

The cap-down may be electrically connected to the electrode assembly by means of a lid member electrically connected to the electrode assembly.

The subplate may be electrically connected to the electrode assembly by means of the cap-down.

The rechargeable battery may further include an insulating board provided between the cap-down and the interrupting plate.

The rechargeable battery according to the invention improves reliability and safety by including an interrupting plate that is capable of being transformed under the predetermined pressure condition but is hardly deteriorated at a high temperature.

### BRIEF DESCRIPTION OF THE DRAWINGS

FIG. 1 is an exploded perspective view of a rechargeable battery according to one embodiment of the present invention.
FIG. 2A to FIG. 2C show a process of separating an interrupting plate and breaking out.
FIG. 3 is a graph showing tensile strength of aluminum alloys according to examples and comparative examples depending upon temperature.

### DETAILED DESCRIPTION OF THE EMBODIMENTS

The present invention will be described more fully hereinafter with reference to the accompanying drawings, in which exemplary embodiments of the present invention are shown.

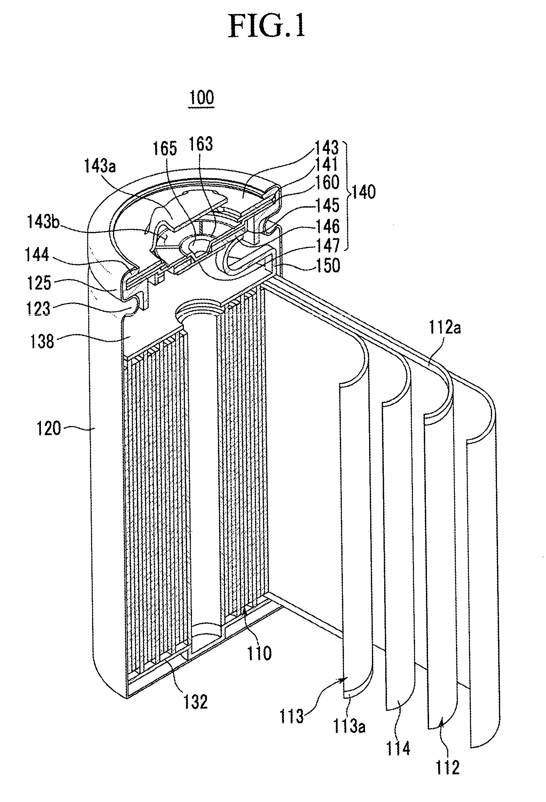

Hereinafter, a rechargeable battery according to one embodiment of the present invention is described in detail referring to FIG. 1,

FIG. 1 is an exploded perspective view of a rechargeable battery according to one embodiment of the present invention.

As shown in FIG. 1, a rechargeable battery 100 according to one embodiment includes an electrode assembly 110 including a positive electrode 112, a negative electrode 113, and a separator 114 interposed therebetween, and a case 120 having an opening at one end for accommodating the electrode assembly 110 together with an electrolyte solution. The opening of the case 120 is mounted with a cap assembly 140 sealing the case 120 by means of a gasket 144.

More particularly, the case 120 is composed of a conductive metal such as a steel plated with aluminum (Al), an aluminum alloy (Al alloy), or nickel (Ni).

The case 120 according to one embodiment is formed in a cylindrical shape having an internal space housing the electrode assembly 110. The cap assembly 140 is inserted in the case 120 and is clamped to be fixed. During this process, a beading part 123 and a clamping part 125 are formed on the case 120.

The electrode assembly 110 according to one embodiment is formed in a cylindrical type in which the positive electrode 112, the separator 114, and the negative electrode 113 are layered and wound in a vortex shape, but the structure of the electrode assembly 110 is not limited thereto and may be formed in other shapes.

On the top of positive electrode 112, a positive uncoated region 112a where a positive active material is not coated is formed to electrically connect to a positive electrode current collecting plate 138. In addition, a negative uncoated region 113a where a negative active material is not coated is formed on the bottom of the negative electrode 113 to electrically connect to a negative electrode current collecting plate 132.

In the negative electrode 113, a negative active material is coated on a current collector consisting of copper or aluminum, and in the positive electrode 112, a positive active material is coated on a current collector consisting of aluminum and the like.

The negative active material may include a carbon-based active material, a silicon-based active material, or a titanium-based active material, and the positive active material may includes a carbon-based active material, a nickel-based active material, a manganese-based active material, a cobalt-based active material, or a tertiary active material.

The cap assembly 140 includes a cap-up 143 mounted with a protruded outer terminal 143a and an exhaust port 143b, and an interrupting plate 160 disposed under the cap-up 143 and including a notch 163 to exhaust gas by being broken at a predetermined pressure condition. The interrupting plate 160 plays a role of blocking electrical connection between the electrode assembly 110 and the cap-up 143 under the predetermined pressure condition.

A positive temperature coefficient element 141 is provided between the cap-up 143 and the interrupting plate 160. The positive temperature coefficient element 141 is used to infinitely increase electrical resistance when the temperature is increased over a predetermined level, and plays a role of blocking current when the temperature of the rechargeable battery 100 is increased over the predetermined level.

A convex part 165 protruding toward the bottom is provided in the center of the interrupting plate 160, and a subplate 147 is welded to combine it with the lower surface of the convex part 165.

A cap-down 146 is disposed between the interrupting plate 160 and the subplate 147, and the cap-down 146 has a disk shape in which hole is provided in the center to insert the convex part 165.

An insulating member 145 is disposed between the cap-down 146 and the interrupting plate 160 to insulate between the cap-down 146 and the interrupting plate 160. The insulating member 145 also has hole to insert the convex part 165 of the cap-up 143.

Thereby, the convex part 165 of the interrupting plate 160 is easily combined with the subplate 147 through holes.

The subplate 147 is respectively welded to the convex part 165 and the cap-down 146. The subplate 147 is electrically connected to the electrode assembly 110 by means of the cap-down 146, and the cap-down 146 is electrically connected to the electrode assembly 110 by means of a lid member 150. Thereby, it facilitates transfer of current to the interrupting plate 160, and the interrupting plate 160 is combined with the cap-up 143 to transfer current to the outer terminal 143a of the cap-up 143.

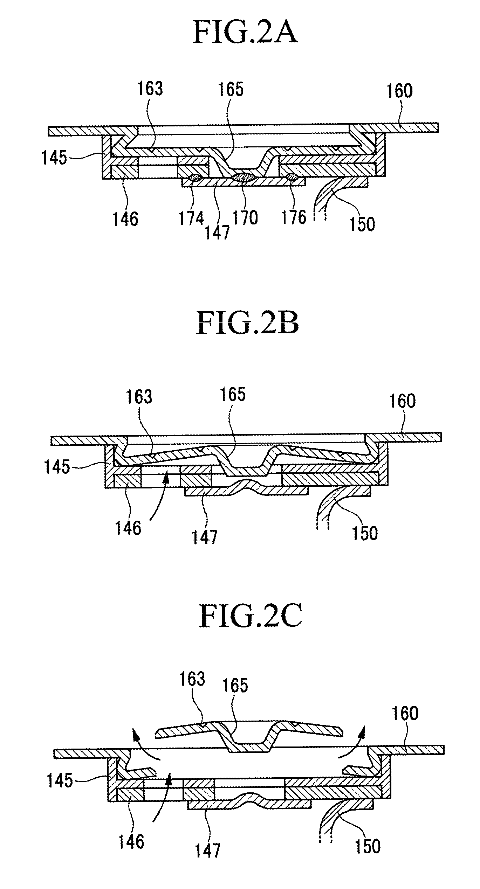

FIG. 2A to FIG. 2C show a process of separating and breaking out an interrupting plate.

As shown in FIG. 2A to FIG. 2C, the subplate 147 and the convex part 165 are combined by ultrasonic welding, and a current blocking member 170 is provided between the subplate 147 and the convex part 165. In addition, the subplate 147 and the cap-down 146 are combined by laser welding, and protruded welding parts 174 and 176 are provided between the subplate 147 and the cap-down 146.

When the internal pressure of the rechargeable battery is increased by the swelling phenomenon during repeated charge and discharge, the convex part 165 of the interrupting plate 160 is moved from the subplate 147 due to the pressure. When the convex part 165 is moved from the subplate 147, the current blocking member 170 disposed between the convex part 165 and the subplate 147 is separated to block current between the interrupting plate 160 and the subplate 147. The pressure that moves the convex part 165 from the subplate 147 is defined as a current blocking pressure.

As shown in FIG. 2C, if the internal pressure of battery is further increased, a notch 163 provided in the interrupting plate 160 is broken to exhaust gas from the inside of battery. The pressure that breaks the notch 163 is defined as a vent breaking pressure.

The current blocking pressure that blocks current and the vent breaking pressure that breaks the notch 163 of interrupting plate 160 are very important components in view of the reliability and the safety of a battery.

As mentioned above, an interrupting plate 160 is moved from the subplate 147 and blocks current between the interrupting plate 160 and the subplate 147 when the internal pressure of rechargeable battery is increased over the predetermined range, and furthermore, when the pressure is continuously increased, the notch 163 provided in the interrupting plate 160 is broken to exhaust gas from the inside of the rechargeable battery to prevent the explosion.

Accordingly, the interrupting plate 160 may be made of a material that is capable of being transformed under the predetermined pressure condition to prevent a rechargeable battery from exploding.

On the other hand, the general transformable material may be easily degraded due to heat and the like. In a rechargeable battery, heat over a certain level of temperature is generated inside thereof during repeated the charge and discharge, and the interrupting plate 160 may be degraded due to the heat. When the interrupting plate 160 is degraded, it is transformed at a pressure of less or more than the appropriate level, causing the current to be blocked too early or too late.

According to the present invention, the interrupting plate 160 is made of an aluminum alloy that is easily transformed under the predetermined pressure condition and is hard to degrade at a high temperature.

The interrupting plate 160 is made of an aluminum alloy including a main component of aluminum (Al) and minor alloy components of magnesium (Mg) and zinc (Zn). The aluminum alloy includes 0.3 to 1.3 wt% of magnesium and 0.1 to 0.3 wt% of zinc.The remaining amount may be aluminum.

The aluminum alloy may further include at least one selected from the group consisting of silicon (Si), iron (Fe), copper (Cu), manganese (Mn), and titanium (Ti). According to another embodiment, the aluminum alloy may further include at least one of the contents of 0.2 to 0.4wt% of silicon (Si), 0.3 to 1.0wt% of iron (Fe), 0.2 to 1.0wt% of copper (Cu), and 0.9 to 2.0wt% of manganese (Mn).

The aluminum alloy may be subjected to an annealing treatment.

The aluminum alloy was measured to determine physical characteristics.

### Tensile Strength

Table 1 shows a composition of an aluminum alloy according to each example and comparative example.

**[Table 1]**

| | Mg (wt%) | Zn (wt%) | Si (wt%) | Fe (wt%) | Cu (wt%) | Mn (wt%) | Ti (wt%) | Al (wt%) |
|---|---|---|---|---|---|---|---|---|
| Example 1 | 0.60 | 0.15 | 0.20 | 0.40 | 0.60 | 1.00 | 0.06 | 96.99 |
| Example 2 | 1.30 | 0.25 | 0.30 | 0.70 | 0.25 | 1.50 | - | 95.70 |
| Comparative Example 1 | - | - | 0.30 | 0.55 | 0.12 | 1.00 | ≤ 0.05 | 97.98 |
| Comparative Example 2 | 0.25 | - | 0.20 | 0.50 | 0.15 | 1.20 | 0.25 | 97.45 |
| Comparative Example 3 | 0.60 | - | 0.25 | 0.50 | 0.20 | 1.00 | 0.60 | 96.85 |

In Table 1 above, the aluminum alloys according to Examples 1 and 2 and Comparative Examples 1 to 3 were subjected to an annealing treatment at about 200° C for about 1 hour.

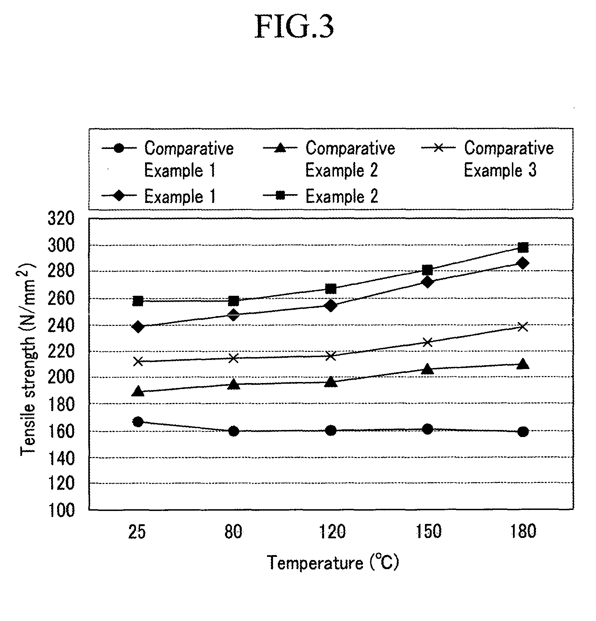

The aluminum alloys according to Examples 1 and 2 and Comparative Examples 1 to 3 were measured to determine tensile strength depending on temperature while the temperature was increased. The results are shown in FIG. 3.

FIG. 3 is a graph showing tensile strength of aluminum alloys according to the examples and comparative examples depending on temperature.

As shown in FIG. 3, it is understood that the rechargeable cell according to Comparative Example 1 decreased tensile strength as the temperature was increased, and rechargeable cells according to Comparative Examples 2 and 3 slightly increased tensile strength as the temperature was increased, but the absolute value thereof was not high enough.

On the other hand, the rechargeable cells according to Example 1 and Example 2 showed relatively high tensile strength of almost 230 N/mm² or more at room temperature (about 25° C), and the tensile strength was increased as the temperature was increased.

### Tensile Strength and Yield Strength

Table 2 shows a composition of aluminum alloys according to Example 3 and Comparative Example 4.

**[Table 2]**

| | Mg (wt%) | Zn (wt%) | Si (wt%) | Fe (wt%) | Cu (wt%) | Mn (wt%) | Ti (wt%) | Al (wt%) |
|---|---|---|---|---|---|---|---|---|
| Example 3 | 0.60 | 0.15 | 0.20 | 0.40 | 0.60 | 1.00 | 0.06 | 96.99 |
| Comparative Example 4 | - | 0.1 | 0.80 | | 0.05 | 0.05 | - | 99 |

In Table 2, the aluminum alloy according to Example 3 had the same composition ratio as in Example 1, but the aluminum alloys according to Example 3 and Comparative Example 4 were annealed at about 350°C for about 10 minutes.

Table 3 shows tensile strength and yield strength of aluminum alloys according to Example 3 and Comparative Example 4 depending on temperature.

**[Table 3]**

| | Temperature (° C) | Tensile strength (N/mm²) | Yield strength (N/mm²) |
|---|---|---|---|
| Example 3 | 24 | 178 | 69 |
| | 100 | 178 | 69 |
| Degradation rate (%) | | 0 | 0 |
| Comparative Example 4 | 24 | 89 | 34 |
| | 100 | 69 | 31 |
| Degradation rate (%) | | 22.5 | 8.8 |

As shown in Table 3, the aluminum alloy according to Example 3 had no change in tensile strength and yield strength depending on temperature, so it had a 0% degradation rate; on the other hand, the aluminum alloy according to Comparative Example 4 had decreased tensile strength and yield strength depending on temperature of 22.5% and 8.8%, respectively. From the results, it is understood that the aluminum alloys according to the examples were not deteriorated due to the heat.

### Operation Test of Interrupting Plate (CID)

Table 4 shows a composition of aluminum alloys according to Example 1 and Comparative Example 5.

**[Table 4]**

| | Mg (wt%) | Zn (wt%) | Si (wt%) | Fe (wt%) | Cu (wt%) | Mn (wt%) | Ti (wt%) | Al (wt%) |
|---|---|---|---|---|---|---|---|---|
| Example 1 | 0.60 | 0.15 | 0.20 | 0.40 | 0.60 | 1.00 | 0.06 | 96.99 |
| Comparative Example 5 | 0.05 | - | 0.03 | 0.4 | 0.05 | 0.05 | - | 99.42 |

In Table 4, the aluminum alloy according to Example 1 had the same composition ratio as the aluminum alloy used in the tensile strength test.

An interrupting plate 160 of the rechargeable battery shown in FIG. 1 was produced with each aluminum alloy according to Example 1 and Comparative Example 5. Then, the internal pressure at which the interrupting plate was operated (initial CID operating pressure) was measured, the interrupting plate was allowed to stand at about 85° C for 3 days, and the internal pressure at which the interrupting plate was operated was measured again.

The results are shown in Tables 5 and 6.

**[Table 5]**

| Internal pressure (kgf/cm²) | F (%) | n | 85° C allowed to stand -operation | | | No operation | Operating pressure (kgf/cm²) |
|---|---|---|---|---|---|---|---|
| | | | 1 day | 2 days | 3 days | | |
| 3.00 | 50.9 | 1 | - | - | - | ○ | 5.4 |
| | | 2 | - | - | - | ○ | 5.4 |
| | | 3 | - | - | - | ○ | 5.8 |
| 3.15 | 53.5 | 1 | - | - | - | ○ | 5.5 |
| | | 2 | - | - | - | ○ | 5.8 |
| | | 3 | - | - | - | ○ | 6.4 |
| 3.4 | 57.4 | 1 | - | - | - | ○ | - |
| | | 2 | - | - | - | ○ | - |
| | | 3 | - | - | - | ○ | - |
| | | | | | | | |
| | | | | | | | |
| | | | | | | | |
| 4.9 | 83.1 | 1 | - | - | - | ○ | 6.0 |
| | | 2 | - | - | - | ○ | 6.2 |
| | | 3 | - | - | - | ○ | 5.2 |
| | | 4 | - | - | - | ○ | 6.1 |
| 5.1 | 86.1 | 1 | - | - | ○ | - | - |
| | | 2 | - | - | ○ | - | - |
| | | 3 | - | - | ○ | - | - |

**[Table 6]**

| Internal pressure (kgf/cm²) | F (%) | n | 85° C allowed to stand - operation | | | No operation | Operating pressure (kgf/cm²) |
|---|---|---|---|---|---|---|---|
| | | | 1 day | 2 days | 3 days | | |
| 2.6 | 44.1 | 1 | - | - | - | ○ | 4.9 |
| | | 2 | - | - | - | ○ | 5.5 |
| | | 3 | - | - | - | ○ | 5.6 |
| 2.8 | 47.5 | 1 | - | - | - | ○ | 5.4 |
| | | 2 | - | - | - | ○ | 5.4 |
| | | 3 | - | - | - | ○ | 5.6 |
| 3.0 | 50.8 | 1 | - | ○ | - | X | - |
| | | 2 | - | - | - | ○ | - |
| | | 3 | - | - | - | ○ | - |
| 3.4 | 57.6 | 1 | ○ | - | - | X | - |
| | | 2 | ○ | - | - | X | - |
| | | 3 | - | ○ | - | X | - |
| 3.6 | 61.0 | 1 | ○ | - | - | X | - |
| | | 2 | ○ | - | - | X | - |
| | | 3 | - | ○ | - | X | - |

Table 5 shows the results of the aluminum alloy according to Example 1, and Table 6 shows the result of the aluminum alloy according to Comparative Example 5. Referring to both Tables 5 and 6, the operating pressure was not measured for all internal pressures, but the results discussed herein for measured values are apparent as discussed herein.

Referring to Table 5, the initial CID operating pressure of the interrupting plate according to Example 1 was 5.89 kgf/cm²; referring to Table 6, the initial CID operating pressure of the interrupting plate according to Comparative Example 5 was 5.9 kgf/cm². In Table 5 and 6, F (%) indicates internal pressure / initial CID operating pressure * 100.

As shown in Table 6, in the aluminum alloy according to Comparative Example 5, the CID was operated at an internal pressure of about 3 kgf/cm². That is, the CID was degraded at a high temperature of around 85° C and consequently operated below the appropriate pressure condition.

On the other hand, in the aluminum alloy according to Example 1, the CID was operated at an internal pressure of about 5.1 kgf/cm² or higher. That is, the CID was little not degraded due to the heat even though it was allowed to stand at a high temperature of about 85° C, and it operated at the appropriate pressure.

As mentioned above, the interrupting plate made of the aluminum alloy according to the examples is capable of being transformed under the predetermined pressure condition but is hardly degraded at a high temperature, so it is possible to provide a rechargeable battery having excellent reliability and safety.

## Claims

1. A rechargeable battery (100) comprising:
an electrode assembly (110) for producing electrical current;
a case (120) for receiving the electrode assembly (110), the case (120) having an opening;
a cap assembly (140) having a cap down (146), a cap up (143), a subplate (147) that is coupled to the electrode assembly (110) and an interrupting plate (160) that is interposed between the cap up (143) and the cap down (146), wherein the interrupting plate (160) is coupled to the subplate (147) and is formed of an aluminum alloy that includes 0.3 to 1.3 wt% of magnesium (Mg) and 0.1 to 0.3 wt% of zinc (Zn) and, optionally, at least one element selected from the group consisting of silicon (Si), iron (Fe), copper (Cu), manganese (Mn) and titanium (Ti).

2. The battery of claim 1, wherein the aluminum alloy includes 0.2 to 0.4 wt % of silicon (Si).

3. The battery of claim 1 or 2, wherein the aluminum alloy includes 0.3 to 1.0 wt% of iron (Fe).

4. The battery of any of claims 1 through 3, wherein the aluminum alloy includes 0.2 to 1.0 wt % of copper (Cu).

5. The battery of any of claims 1 through 4, wherein the aluminum alloy includes 0.9 to 2.0 wt % of manganese (Mn).

6. The battery of any of the preceding claims, wherein the interrupting plate (160) includes a convex part (165) mounted under the cap up (143) that extends towards the case (120).

7. The battery of claim 6, wherein the subplate (147) is mounted under the interrupting plate (160) and the subplate (147) is welded to the convex part (165) to electrically connect to the electrode assembly (110).

8. The battery of claim 7, wherein the cap down (146) is disposed between the interrupting plate (160) and the subplate (147) and wherein there is a protrusion that is interposed between the interrupting plate (160) and the subplate (147).

9. The battery of claim 8, further comprising a current blocking member (170) that is interposed between the convex part (165) of the interrupting plate (160) and the subplate (147).

## Patentansprüche

1. Wiederaufladbare Batterie (100), aufweisend:
eine Elektrodenanordnung (110) zur Erzeugung von elektrischem Strom;
ein Gehäuse (120) zur Aufnahme der Elektrodenanordnung (110), wobei das Gehäuse (120) eine Öffnung aufweist;
eine Deckelanordnung (140), die einen Deckelunterteil (146), einen Deckeloberteil (143) eine Unterplatte (147), die an die Elektrodenanordnung (110) gekoppelt ist, und eine Unterbrechungsplatte (160), die zwischen dem Deckeloberteil (143) und dem Deckelunterteil (146) angeordnet ist, aufweist, wobei die Unterbrechungsplatte (160) an die Unterplatte (147) gekoppelt ist und aus einer Aluminiumlegierung ausgebildet ist, die 0,3 bis 1,3 Gew.-% Magnesium (Mg) und 0,1 bis 0,3 Gew.-% Zink (Zn) und optional zumindest ein Element aufweist, das aus der Gruppe bestehend aus Silizium (Si), Eisen (Fe), Kupfer (Cu), Mangan (Mn) und Titan (Ti) ausgewählt ist.

2. Batterie nach Anspruch 1, wobei die Aluminiumlegierung 0,2 bis 0,4 Gew.-% Silizium (Si) aufweist.

3. Batterie nach Anspruch 1 oder 2, wobei die Aluminiumlegierung 0,3 bis 1,0 Gew.% Eisen (Fe) aufweist.

4. Batterie nach einem der Ansprüche 1 bis 3, wobei die Aluminiumlegierung 0,2 bis 1,0 Gew.-% Kupfer (Cu) aufweist.

5. Batterie nach einem der Ansprüche 1 bis 4, wobei die Aluminiumlegierung 0,9 bis 2,0 Gew.-% Mangan (Mn) aufweist.

6. Batterie nach einem der vorhergehenden Ansprüche, wobei die Unterbrechungsplatte (160) einen unter dem Deckeloberteil (143) angebrachten konvexen Teil (165) aufweist, der sich zum Gehäuse (120) hin erstreckt.

7. Batterie nach Anspruch 6, wobei die Unterplatte (147) unter der Unterbrechungsplatte (160) angebracht ist und die Unterplatte (147) mit dem konvexen Teil (165) verschweißt ist, so dass sie mit der Elektrodenanordnung (110) elektrisch verbunden ist.

8. Batterie nach Anspruch 7, wobei der Deckelunterteil (146) zwischen der Unterbrechungsplatte (160) und der Unterplatte (147) angeordnet ist und wobei es einen Vorsprung gibt, der zwischen der Unterbrechungsplatte (160) und der Unterplatte (147) angeordnet ist.

9. Batterie nach Anspruch 8, weiterhin aufweisend ein Stromsperrelement (170), das zwischen dem konvexen Teil (165) der Unterbrechungsplatte (160) und der Unterplatte (147) angeordnet ist.

## Revendications

1. Batterie rechargeable (100) comprenant :
un assemblage d'électrodes (110) pour produire du courant électrique ;
un boîtier (120) pour recevoir l'assemblage d'électrodes (110), le boîtier (120) comportant un orifice ;
un assemblage servant de couvercle (140) comportant un élément inférieur de couvercle (146), un élément supérieur de couvercle (143), une plaque sous-jacente (147) qui est couplée à l'assemblage d'électrodes (110), et une plaque interruptrice (160) qui est interposée entre l'élément supérieur de couvercle (143) et l'élément inférieur de couvercle (146), ladite plaque interruptrice (160) étant couplée à la plaque sous-jacente (147) et étant formée d'un alliage d'aluminium qui comprend 0,3 à 1,3 % en poids de magnésium (Mg) et 0,1 à 0,3 % en poids de zinc (Zn) et, facultativement, au moins un élément choisi dans le groupe consistant en le silicium (Si), le fer (Fe), le cuivre (Cu), le manganèse (Mn) et le titane (Ti).

2. Batterie suivant la revendication 1, dans laquelle l'alliage d'aluminium comprend 0,2 à 0,4 % en poids de silicium (Si).

3. Batterie suivant la revendication 1 ou 2, dans laquelle l'alliage d'aluminium comprend 0,3 à 1,0 % en poids de fer (Fe).

4. Batterie suivant l'une quelconque des revendications 1 à 3, dans laquelle l'alliage d'aluminium comprend 0,2 à 1,0 % en poids de cuivre (Cu).

5. Batterie suivant l'une quelconque des revendications 1 à 4, dans laquelle l'alliage d'aluminium comprend 0,9 à 2,0 % en poids de manganèse (Mn).

6. Batterie suivant l'une quelconque des revendications précédentes, dans laquelle la plaque interruptrice (160) comprend une partie convexe (165) montée sur l'élément supérieur de couvercle (143) qui s'étend vers le boîtier (120).

7. Batterie suivant la revendication 6, dans laquelle la plaque sous-jacente (147) est montée sous la plaque interruptrice (160) et la plaque sous-jacente (147) est soudée à la partie convexe (165) pour la connexion électrique à l'assemblage d'électrodes (110).

8. Batterie suivant la revendication 7, dans laquelle l'élément inférieur de couvercle (146) est disposé entre la plaque interruptrice (160) et la plaque sous-jacente (147), et dans laquelle il existe une protubérance qui est interposée entre la plaque interruptrice (160) et la plaque sous-jacente (147).

9. Batterie suivant la revendication 8, comprenant en outre un élément de blocage de courant (170) qui est interposé entre la partie convexe (165) de la plaque interruptrice (160) et la plaque sous-jacente (147).
